# FASCICULE DE BREVET EUROPEEN

(11) **EP 2 013 080 B1**
(45) Date de publication et mention de la délivrance du brevet: **19.10.2011**
(21) Numéro de dépôt: 07727840.6
(22) Date de dépôt: 05.04.2007
(51) Int. Cl.: B64D 41/00

(54) **SYSTEME ET PROCEDE DE DISTRIBUTION DE L'ENERGIE ELECTRIQUE A L'INTERIEUR D'UN AERONEF**
ELEKTRIZITÄTSVERTEILUNGSSYSTEM UND -VERFAHREN IN EINEM LUFTFAHRZEUG
ELECTRICITY DISTRIBUTION SYSTEM AND METHOD INSIDE AN AIRCRAFT

(30) Priorité: 04.05.2006 FR 0651597
(43) Date de publication de la demande: 14.01.2009
(73) Titulaire: AIRBUS OPERATIONS, 31060 Toulouse (FR)
(72) Inventeur: SERVENTI, Pascal, F-31490 Leguevin (FR); LARROQUE, Guillaume, F-32600 Monbrun (FR)
(74) Mandataire: Ilgart, Jean-Christophe
(86) Numéro de dépôt international: PCT/EP2007/053372
(87) Numéro de publication internationale: WO 2007/128637

(56) Documents cités:
- US-A- 5 612 579
- US-A- 5 936 318
- US-A1- 2002 064 010
- US-A1- 2003 212 513
- US-A1- 2005 097 373
- US-B1- 6 798 630

## Description

### DOMAINE TECHNIQUE

La présente invention concerne un système et un procédé de distribution de l'énergie électrique à l'intérieur d'un aéronef.

Dans la suite, pour simplifier la description, on considère un aéronef de type avion.

### ÉTAT DE LA TECHNIQUE ANTÉRIEURE

Aujourd'hui dans les systèmes de l'art connu, toute modification de la configuration des protections électriques d'un avion nécessite :
- soit l'activation manuelle d'une protection par disjonction, cette protection comportant ou non un électronique de détection de surcourant et de commande, et le téléchargement des bases de données associées à l'unité gérant les charges électriques,
- soit le téléchargement de toutes les bases de données des éléments de protection/commutation électroniques du système de distribution électrique.

Ces protections électriques peuvent être de différents types : I₂t (protection des surcourants), GFI (« Ground Fault Interruption » ou interruption pour court-circuit à la masse), AFD (« Arc Fault Detection » ou détection d'un arc de court-circuit).

La fonction basique du système de distribution électrique d'un avion est, en effet, de distribuer l'énergie d'une source de puissance jusqu'à une charge électrique et de protéger l'intégrité du câblage entre cette source et cette charge contre des échauffements dus à des surcourants excédant la consommation électrique de cette charge à partir de laquelle la protection a été calculée. Une telle protection est réalisée par un composant de type fusible, si il est non ré-armable, ou un composant de type disjoncteur, si il est ré-armable.

Sur les avions de dernière génération, on utilise des disjoncteurs électroniques. Une électronique de mesure et détection de surcourant spécifique peut alors intégrer des logiques de commande et de disjonction complexes et être connectée à un réseau de communication partagé dans tout l'avion. Une électronique de disjonction peut être réalisée soit par des composants de type relais pour les charges à forte consommation (supérieure à 15A), un tel composant étant alors un élément de protection/commutation électronique de type RCCB (« Remote Controlled Circuit Breaker ») aussi nommée CPD (« Commutation and Protection Device »), soit par des composants électroniques de puissance à base de transistors, un tel composant étant alors un élément de protection/commutation électronique de type SSPC (« Solid State Power Controller »). Ces éléments de protection/commutation électroniques sont concentrés et intégrés dans les coeurs de distribution (équivalent à des armoires électriques) de l'avion.

Dans chacun de ces coeurs de distribution électrique, chacun de ces éléments de protection/commutation électroniques est programmé par logiciel au travers d'une base de données définissant les paramètres essentiels à son fonctionnement tels que notamment les règles de définition du surcourant par rapport à la consommation de la charge concernée (calibre), le nom de la charge alimentée, son emplacement dans le coeur électrique, son état (fermé/ouvert), son état d'installation (charge présente sur avion ou non), ses logiques de commande.

Les tâches de maintenance liées à la configuration d'un élément de protection/commutation électronique lors de l'installation d'un nouvel équipement nécessitent de modifier le câblage et le téléchargement des bases de données du système de distribution électrique et des systèmes adjacents. Une telle modification entraîne une série de tâches lourdes, et onéreuses qui nécessitent d'immobiliser l'avion et de faire appel aux services support constructeur et/ou fournisseur, du fait d'une activité de conception complémentaire.

L'invention a pour objet de résoudre un tel problème technique en permettant l'activation ou la désactivation des alimentations électriques des systèmes électriques liés à l'utilisation d'éléments protection/commutation électroniques, sans appliquer de procédures de téléchargement de logiciel embarqué associé à une configuration globale avion.

Un document de l'art connu, US 5, 936, 318 décrit un système de distribution d'énergie dans un aéronef comprenant un conducteur d'énergie constitué de plusieurs lignes individuelles d'alimentation avec, sur le trajet du conducteur d'énergie, au moins un distributeur auquel est raccordé chaque fois un groupe de consommateurs par un câble de dérivation et un commutateur de circuit de puissance, les consommateurs de chaque groupe de consommateurs étant reliés aux lignes d'alimentation selon une configuration prédéfinie des affectations, dans lequel :
- pour chaque groupe de consommateurs, il est prévu une unité d'affectation en amont de laquelle est branchée une unité de contrôle d'énergie par l'intermédiaire d'un bus de données,
- chaque unité d'affectation présente un étage de réception en aval duquel est montée une unité de commande d'affectation pour générer des ordres de commutation adressés au disjoncteur de puissance auquel sont raccordés les consommateurs de chaque groupe de consommateurs,
- l'unité centrale de contrôle d'énergie présente une matrice standard dans laquelle sont enregistrés des ordres d'affectation ainsi qu'une matrice de priorité montée en aval et dans laquelle est enregistrée une liste selon laquelle les consommateurs sont classés par ordre de priorité, la matrice de priorité recevant d'une unité d'état d'énergie par un conducteur des données sur l'état du conducteur d'énergie, tandis qu'en aval de la matrice de priorité, se trouve un processeur de sélection, pour établir par le calcul la capacité de charge des circuits individuels de protection de courant, et pour déterminer des valeurs limites correspondantes en vue de les enregistrer dans une unité d'émission,
- l'unité centrale de contrôle d'énergie, afin de traiter des informations de désordre, coopère avec chaque unité d'affectation par le bus de données afin de transmettre des ordres de commande, de manière que sur la base des informations de désordre, les utilisateurs concernés par la défaillance d'une ligne d'alimentation soient raccordés automatiquement à des lignes d'alimentation encore intactes selon leur priorité prédéfinie par la matrice de priorité.

### EXPOSÉ DE L'INVENTION

L'invention concerne un aéronef comprenant un système de distribution de l'énergie électrique à l'intérieur de cet aéronef comprenant deux systèmes de distribution électrique primaire et secondaire de l'énergie électrique de plusieurs sources de puissance à des charges électriques de cet aéronef au travers d'éléments de protection/commutation configurables électriques et/ou électroniques, commandables par électronique dédiée et une interface homme-machine, caractérisé en ce que chaque système de distribution électrique comprend une électronique de commande dans laquelle est téléchargé un fichier de configuration qui est une base de données attribuant à chacun des éléments de protection/commutation un état d'installation, en ce que le système de distribution électrique primaire est alimenté par les sources de puissance et alimente des premières charges électriques à forte consommation grâce à des premiers éléments de protection/commutation électromécaniques configurables, et en ce que le système de distribution électrique secondaire est alimenté par le système de distribution primaire et alimente des secondes charges électriques à faible consommation grâce à des seconds éléments de protection/commutation électroniques configurables, chaque charge électrique étant identifiée comme « configurable normal » ou comme « configurables Plug and Fly », et en ce que l'interface homme-machine est composée d'une partie terminal, permettant l'affichage et la saisie d'informations, et d'une partie intelligence, qui permet de commander les états électriques des éléments de protection/commutation électroniques des coeurs de distribution électrique au travers d'un bus de communication bi-directionnel et qui comprend des moyens d'envoi d'au moins une commande d'installation ou de désinstallation pour modifier en dynamique l'état d'installation programmé.

Avantageusement un état d'installation est codé en dur dans chacun des fichiers de configuration, pour chacune des charges électriques.

Avantageusement chaque charge électrique est identifiée comme « configurable normal » ou « configurable plug and fly » dans une base de données de configuration de l'avion, un état d'installation par défaut étant affecté à chaque charge au travers d'un fichier de configuration.

Avantageusement pour une charge identifiée comme « configurable normal », l'état d'installation est fixé à une valeur fixe qui est la valeur par défaut. Pour une charge identifiée comme a configurable plug and fly », l'état d'installation est un paramètre variable fonction de la commande venant d'une interface et fonction de la valeur par défaut.

Avantageusement l'aéronef est un avion.

L'invention concerne également un procédé de distribution de l'énergie électrique à l'intérieur d'un aéronef dans lequel on distribue l'énergie électrique de plusieurs sources de puissance au moyen de deux systèmes de distribution électrique primaire et secondaire à des charges électriques de cet aéronef au travers d'éléments de protection/commutation configurables électriques et/ou électroniques et commandables par électronique dédiée et on utilise une interface homme/machine, caractérisé en ce que, le système de distribution électrique primaire étant alimenté par les sources de puissance et alimentant des charges électriques à forte consommation grâce à des premiers éléments de protection/commutation électromécaniques configurables et le système de distribution électrique secondaire étant alimenté par le système de distribution primaire et alimentant des charges électriques à faible consommation grâce à des seconds éléments de protection/commutation électroniques configurables, on télécharge un fichier de configuration qui est une base de données attribuant à chacun des éléments de protection/commutation un état d'installation dans l'électronique de commande de chaque système de distribution, en ce que l'on préinstalle les éléments de protection/communication électroniques dans les systèmes de distribution électrique et on les pré-programme par rapport à la charge que le système est sensé alimenter et en ce que l'on envoie au moins une commande d'installation ou de désinstallation pour modifier en dynamique l'état d'installation programmé, et en ce que chaque charge électrique est identifiée comme « configurable normal » ou « configurable Plug and Fly ».

Avantageusement un état d'installation est codé en dur dans chacun des fichiers de configuration, pour chacune des charges électriques.

Avantageusement un état d'installation par défaut est affecté à chaque charge. Pour une charge identifiée comme « configurable normal », l'état d'installation est fixé à une valeur fixe qui est la valeur par défaut. Pour une charge identifiée comme « configurable plug and fly », l'état d'installation est un paramètre variable fonction de la commande venant de l'interface et fonction de la valeur par défaut.

Avantageusement l'interface émet une commande d'installation/désinstallation :
- Si la charge est identifiée dans la base de donnée comme « Configurable normal », l'interface n'autorise pas l'accès à une page de commande d'installation/désinstallation et en avertit l'opérateur.
- Si la charge est identifiée comme « Configurable Plug and Fly », l'interface propose l'accès à une page de commande permettant de modifier l'état d'installation de la protection électrique.

L'invention permet de réaliser un précâblage. Elle permet d'activer les systèmes électriques et les données de communication qui leur sont associées, via une interface homme machine spécifique, selon le besoin client.

L'invention permet, de plus, de réduire les coûts de maintenance, notamment au niveau client/utilisateur avion. Elle permet, en effet, une immobilisation plus courte de l'avion et une indépendance du client par rapport au support constructeur et/ou fournisseur.

L'invention permet, enfin, d'éviter des erreurs d'installation puisqu'elle ne nécessite pas d'intervenir au niveau matériel sur l'avion.

### BRÈVE DESCRIPTION DES DESSINS

La figure 1 illustre un système de distribution de l'énergie électrique à l'intérieur d'un avion selon l'invention.
La figure 2 illustre le système interface et les coeurs de distribution dans le système de l'invention.

### EXPOSE DETAILLE DE MODES DE REALISATION PARTICULIERS

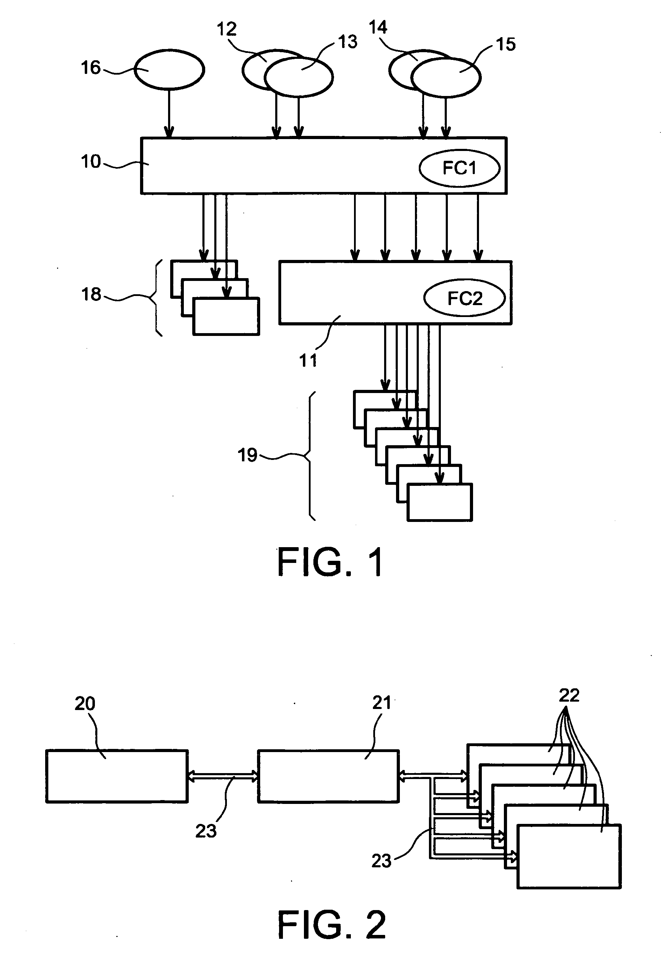

La figure 1 illustre le système de distribution électrique d'un avion, qui a pour fonction d'alimenter en puissance électrique toutes les charges (équipements) électriques, ou consommateurs, de l'avion. Ce système comprend un système de distribution électrique primaire 10 et un système de distribution électrique secondaire 11.

Le système de distribution primaire 10 est alimenté par des générateurs 12, 13, 14 et 15, et éventuellement par une source auxiliaire 16.

Le système de distribution secondaire 11 est alimenté par ce système de distribution primaire 10. Chacun de ces systèmes de distribution 10 et 11 alimente des charges électriques : respectivement des charges électriques à forte consommation 18, et des charges électriques à faible consommation 19.

Dans chacun de ces deux systèmes, conformément à l'invention, est représenté un fichier de configuration, respectivement FC1 et FC2, qui est issu des outils de gestion de configuration de l'avion.

Le système de distribution électrique primaire 10 a, ainsi, pour fonction de :
- gérer le réseau électrique général de l'avion en fonction de la disponibilité des générateurs de puissances électriques 12, 13, 14 et 15 au travers de contacteurs/commutateurs de puissance,
- distribuer la puissance électrique vers les gros consommateurs de l'avion, tels que les pompes à kérosène, les actionneurs de commandes de vol, grâce aux éléments électriques de protection/commutation de type RCCB, qui sont des composants électromécaniques configurables et commandables par électronique dédiée,
- distribuer la puissance électrique vers le système de distribution électrique secondaire 11.

Le système de distribution secondaire 11 a, ainsi, pour fonction de :
- distribuer la puissance électrique vers toutes les charges électriques à faible consommation de l'avion (tels que les calculateurs avioniques) à travers une forte densité de ligne de distribution grâce à l'utilisation d'éléments de protection/commutation électronique de type SSPC, qui sont des composants purement électroniques configurables et commandables par électronique dédiée,
- commander ces éléments de protection/commutation électroniques afin d'alimenter ou non les charges électriques en fonction d'une logique pré-établie.

Selon l'invention, les éléments de protection/commutation électroniques sont configurés électroniquement au travers de fichiers de configuration FC1 et FC2. Ces fichiers de configuration FC1 et FC2 sont des bases de données téléchargées dans les électroniques de commandes des systèmes secondaire et primaire 10 et 11, qui permettent d'attribuer à chaque élément de protection/commutation électronique les caractéristiques qui vont lui permettre de gérer la ligne d'alimentation électrique associée. L'état d'installation d'un élément de protection/commutation électronique est une caractéristique configurante de l'avion.

Comme illustré sur la figure 2, l'interface homme machine utilisée pour mettre en oeuvre l'invention est une interface composée d'une partie « terminal » 20, qui permet l'affichage et la saisie d'informations, et d'une partie « intelligence » 21, qui permet de commander les états électriques des éléments de protection/commutation électroniques des coeurs de distribution électrique 22 au travers d'un bus de communication bi-directionnel 23.

L'invention permet ainsi d'activer ou de désactiver les alimentations électriques et les fonctions électriques associées (fonction interne d'autodiagnostic de chaque équipement dite BITE ou « Build In Test Equipment », détection de déclenchement, fonction de commutation, alarmes cockpit, etc...) sans avoir à effectuer de lourdes tâches de maintenance, en installant les nouveaux éléments de protection/commutation électroniques et le téléchargement de base de données modifiées pour tous les équipements.

### Exemple d'un mode de réalisation

Dans l'invention, chaque charge électrique est identifiée comme « configurable normal » ou comme « Configurable Plug and Fly » dans la base de données de configuration de l'avion, un état d'installation par défaut lui étant affecté au travers du fichier de configuration.

Le concept de « Plug and Fly », de manière analogue au concept « Plug and Play » informatique, permet d'utiliser une charge électrique nouvellement connectée au réseau électrique en l'installant physiquement et en réalisant le minimum d'intervention de reconfiguration du système de distribution électrique et de modification du câblage. Les éléments de protection/commutation électroniques sont ainsi préinstallés dans les systèmes de distribution électrique et pré-programmés par rapport à la charge que le système est sensé alimenter. L'activation de la ligne de distribution électrique ne nécessite pas de maintenance lourde mais uniquement une activation logicielle via l'interface permettant de communiquer des commandes et de récupérer des informations des coeurs de distribution électrique.

Pour chaque charge électrique de type « Configurable Plug and Fly », le coeur de distribution électrique considéré calcule l'état d'installation de l'élément de protection/commutation associé à partir d'un état par défaut défini dans le fichier de configuration et des commandes reçues depuis l'interface. Le coeur électrique peut ensuite communiquer cet état d'installation à l'ensemble des systèmes électriques intéressés.

Pour chaque charge électrique de type « configurable normal », le coeur de distribution électrique considéré prend uniquement en compte l'état par défaut pour établir l'état d'installation de l'élément de protection/commutation associé. Les éventuelles commandes d'installation provenant de l'interface pour cette charge sont ignorées.

Dans les systèmes de distribution électrique on code en dur un état d'installation, i.e. « installé »/« non-installé », dans chacun des fichiers de configuration des charges de la façon suivante :
- Une valeur par défaut de l'état d'installation de chaque charge électrique est définie dans les fichiers de configuration générés par les outils de gestion de configuration de l'avionneur.
- Pour chaque charge électrique identifiée comme « configurable normal », l'état d'installation est figé à une valeur fixe qui est la valeur par défaut.
- Pour chaque charge électrique identifiée comme « Configurable Plug and Fly », l'état d'installation est un paramètre variable avec une valeur attribuée en fonction de la commande venant de l'interface et en fonction de la valeur par défaut.
- Lorsqu'un état d'installation est configuré à « non installé », la protection est forcée à l'ouverture par le coeur de distribution électrique.

L'interface, illustrée sur la figure 2, permet de commander les éléments de protection/commutation électroniques afin de les sécuriser en position ouverte. Ceci permet de couper l'alimentation électrique en aval pour que l'opérateur puisse travailler en toute sécurité. L'interface permet également de ré-armer (« reset ») une protection/commutation électronique lorsque sa fonction de protection en surcourant (« trip ») lui a imposé de s'ouvrir.

Cette interface dispose d'une fonction supplémentaire permettant d'envoyer une commande d'installation ou de désinstallation pour modifier en dynamique l'état d'installation programmé dans la base de données des coeurs électriques.

Les fichiers de configuration de l'interface contiennent également le type de la charge électrique associée à la protection du coeur de distribution électrique, à savoir « Configurable normal » ou « « Configurable Plug and Fly ».

L'état d'installation électrique des éléments de protection/commutation électroniques de la base de donnée de l'interface est renseigné dynamiquement par une communication provenant des coeurs de distribution électrique.

Le fonctionnement de l'interface permettant l'émission de la commande d'installation /désinstallation de la protection électrique est le suivant :
- si la charge est identifiée dans la base de donnée comme « Configurable normal », l'interface n'autorise pas l'accès à une page de commande d'installation/désinstallation et en avertit l'opérateur. En parallèle, l'intelligence de commande de l'interface interdit toute commande d'installation.
- si la charge est identifiée comme « Configurable Plug and Fly », l'interface propose l'accès à une page de commande permettant de modifier l'état d'installation de la protection électrique. En parallèle l'intelligence de commande de l'interface permet l'envoi d'une commande d'installation ou de désinstallation.

La possibilité de modifier l'état d'installation d'un élément de protection/commutation d'une charge « Plug and Fly » n'est offerte que lorsque l'avion est au sol, les conséquences sécuritaires d'une désinstallation arbitraire d'un grand nombre d'éléments de protection/commutation électroniques pouvant être importantes.

### Variantes de réalisation

L'invention peut s'appliquer à toutes les charges électriques de l'avion protégées par des protections électroniques dans le cas d'une contrainte de précaution de développement fort : redondance de fonction, vérification d'intégrité logicielle permanente pour éviter des modes panne communs.

L'invention peut s'appliquer à des technologies de protection dites conventionnelles non associées à l'intégration de logiciel. Les logiques de ce fait sont réalisées par câblage et par relais.

L'invention peut aussi s'appliquer à l'activation de fonctions pour les logiques d'alimentation intégrées dans les bases de données. Cela permet l'inhibition ou l'activation automatique de fonctions selon les missions considérées ou choisies pour l'avion. On peut par exemple choisir d'activer ou non les logiques d'alimentation associées à l'utilisation des charges électriques pour assurer une mission avion par exemple du type alimentation en vol (« Air to Air Refuelling », « Aerial delivery », ...).

L'invention peut aussi s'appliquer à l'activation ou à la désactivation des fonctions de protection spécifiques (GFI, AFD) aux protections SSPC et RCCB en fonction du besoin de l'équipement connecté.

## Revendications

1. Aéronef comprenant un système de distribution de l'énergie électrique à l'intérieur de cet aéronef comprenant deux systèmes de distribution électrique primaire et secondaire (10, 11) de l'énergie électrique de plusieurs sources de puissance (14-16) à des charges électriques (18, 19) de cet aéronef au travers d'éléments de protection/commutation configurables électriques et/ou électroniques, commandables par électronique dédiée et une interface homme-machine, **caractérisé en ce que** chaque système de distribution électrique (10, 11) comprend une électronique de commande dans laquelle est téléchargé un fichier de configuration (FC1, FC2) qui est une base de données attribuant à chacun des éléments de protection/commutation un état d'installation, **en ce que** le système de distribution électrique primaire est alimenté par les sources de puissance (14-16) et alimente des premières charges électriques à forte consommation (18) grâce à des premiers éléments de protection/commutation électromécaniques configurables, et **en ce que** le système de distribution électrique secondaire (11) est alimenté par le système de distribution primaire et alimente des secondes charges électriques à faible consommation (19) grâce à des seconds éléments de protection/commutation électroniques configurables, chaque charge électrique étant identifiée comme « configurable normal » ou comme « configurable Plug and Fly », et **en ce que** l'interface homme-machine est composée d'une partie terminal (20), permettant l'affichage et la saisie d'informations, et d'une partie intelligence (21), qui permet de commander les états électriques des éléments de protection/commutation électroniques des coeurs de distribution électrique (22) au travers d'un bus de communication bi-directionnel (23) et qui comprend des moyens d'envoi d'au moins une commande d'installation ou de désinstallation pour modifier en dynamique l'état d'installation programmé.

2. Aéronef selon la revendication 1, dans lequel un état d'installation est codé en dur dans chacun des fichiers de configuration, pour chacune des charges électriques.

3. Aéronef selon la revendication 2, dans lequel chaque charge électrique est identifiée comme « configurable normal » ou « configurable Plug and Fly » dans une base de données de configuration de l'aéronef.

4. Aéronef selon la revendication 3, dans lequel un état d'installation par défaut est affecté à chaque charge au travers d'un fichier de configuration.

5. Aéronef selon la revendication 4, dans lequel, pour une charge identifiée comme « configurable normal », l'état d'installation est fixé à une valeur fixe qui est la valeur par défaut.

6. Aéronef selon la revendication 4, dans lequel, pour une charge identifiée comme « configurable Plug and Fly », l'état d'installation est un paramètre variable fonction de la commande venant d'une interface et fonction de la valeur par défaut.

7. Procédé de distribution de l'énergie électrique à l'intérieur d'un aéronef dans lequel on distribue l'énergie électrique de plusieurs sources de puissance (14-16) au moyen de deux systèmes de distribution électrique primaire et secondaire (10, 11) à des charges électriques (18, 19) de cet aéronef au travers d'éléments de protection/commutation configurables électriques et/ou électroniques et commandables par électronique dédiée et on utilise une interface homme/machine, **caractérisé en ce que**, le système de distribution électrique primaire étant alimenté par les sources de puissance (14-16) et alimentant des charges électriques à forte consommation (18) grâce à des premiers éléments de protection/commutation électromécaniques configurables et le système de distribution électrique secondaire (11) étant alimenté par le système de distribution primaire et alimentant des charges électriques à faible consommation (19) grâce à des seconds éléments de protection/commutation électroniques configurables, on télécharge un fichier de configuration (FC1, FC2) qui est une base de données attribuant à chacun des éléments de protection/commutation un état d'installation dans l'électronique de commande de chaque système de distribution (10, 11), **en ce que** l'on préinstalle les éléments de protection/communication électroniques dans les systèmes de distribution électrique et on les pré-programme par rapport à la charge que le système est sensé alimenter et **en ce que** l'on envoie au moins une commande d'installation ou de désinstallation pour modifier en dynamique l'état d'installation programmé, et **en ce que** chaque charge électrique est identifiée comme « configurable normal » ou « configurable Plug and Fly ».

8. Procédé selon la revendication 7, dans lequel un état d'installation est codé en dur dans chacun des fichiers de configuration, pour chacune des charges électriques.

9. Procédé selon la revendication 7, dans lequel un état d'installation par défaut est affecté à chaque charge.

10. Procédé selon la revendication 9, dans lequel, pour une charge identifiée comme « configurable normal », l'état d'installation est fixé à une valeur fixe qui est la valeur par défaut.

11. Procédé selon la revendication 9, dans lequel, pour une charge identifiée comme « configurable Plug and Fly », l'état d'installation est un paramètre variable fonction de la commande venant d'une interface et fonction de la valeur par défaut.

12. Procédé selon la revendication 11, dans lequel l'interface émet une commande d'installation/désinstallaticn :
- Si la charge est identifiée dans la base de donnée comme « Configurable normal », l'interface n'autorise pas l'accès à une page de commande d'installation/désinstallation et en avertit l'opérateur.
- Si la charge est identifiée comme « Configurable Plug and Fly », l'interface propose l'accès à une page de commande permettant de modifier l'état d'installation de la protection électrique.

## Claims

1. An aircraft comprising a system for distributing electric energy inside this aircraft comprising two primary and secondary electric systems (10, 11) for distributing electric energy from several power sources (14-16) to electric loads (18, 19) of this aircraft through electric and/or electronic configurable protective/switching components, controllable by dedicated electronics and a man/machine interface, **characterized in that** each electronic distribution system (10, 11) comprises control electronics into which is uploaded a configuration file (FC1, FC2), which is a database assigning to each of the protective/switching components an installation state, **in that** the primary electric distribution system is powered by power sources (14-16) and powers first strong consumption electric loads (18) by means of first configurable electromechanical protective /switching components, and **in that** the secondary electric distribution system (11) is powered by the primary distribution system and powers second low consumption electric loads (19) by means of second configurable electronic protective/switching components, each electric load being identified as being "normal configurable" or as being "Plug-and-Fly configurable", and **in that** the man-machine interface consists of a monitor portion (20), allowing display and input of information, and of a smart portion (21), which allows control of the electric states of the electronic protective/switching components of the electric distribution cores (22) through a bidirectional communications bus (23), and which comprises means for sending at least one installation or uninstallation command for dynamically modifying the programmed installation state.

2. The aircraft according to claim 1, wherein an installation state is hard-coded in each of the configuration files, for each of the electric loads.

3. The aircraft according to claim 2, wherein each electric load is identified as being "normal configurable" or as being "Plug-and-Fly configurable", in a database for configuring the aircraft.

4. The aircraft according to claim 3, wherein a default installation state is assigned to each load through a configuration file.

5. The aircraft according to claim 4, wherein, for a load identified as being "normal configurable", the installation state is set to a fixed value, which is the default value.

6. The aircraft according to claim 4, wherein for a load identified as being "Plug-and-Fly configurable", the installation state is a variable parameter depending on the command from an interface, and depending on the default value.

7. A method for distributing electricity inside an aircraft wherein electric energy from several power sources (14-16) is distributed by means of two primary and secondary electric distribution systems (10, 11) to electric loads (18, 19) of this aircraft through electric and/or electronic configurable protective/switching components, controllable by dedicated electronics, and a man-machine interface is used, **characterized in that**, the primary electric distribution system being powered by power sources (14-16) and powering first strong consumption electric loads (18) by means of first configurable electromechanical protective/switching components, and the secondary electric distribution system (11) being powered by the primary distribution system and powering low consumption electric loads (19) by means of second configurable electronic protective/switching components, a configuration file (FC1, FC2), which is a database, assigns to each of the protective/switching components an installation state in the control electronics of each distribution system (10, 11), **in that** the electronic protected/switching components are pre-installed in the electric distribution systems and they are pre-programmed with respect to the load which the system is supposed to power and **in that** at least one installation or uninstallation command is sent for dynamically modifying the programmed installation state, and **in that** each electric load is identified as being "normal configurable" or "Plug-and-Fly configurable".

8. The method according to claim 7, wherein an installation state is hard-coded in each of the configuration files, for each of the electric loads.

9. The method according to claim 7, wherein a default installation state is assigned to each load.

10. The method according to claim 9, wherein, for a load identified as being "normal configurable", the installation state is set to a fixed value, which is the default value.

11. The method according to claim 9, wherein for a load identified as being "Plug-and-Fly configurable", the installation state is a variable parameter depending on the command from an interface, and depending on the default value.

12. The method according to claim 11, wherein the interface emits an installation/uninstallation command:
- if the load is identified in the database as being "normal configurable", the interface does not allow access to an installation/uninstallation command page and warns the operator;
- if the load is identified as being "Plug-and-Fly configurable", the interface proposes access to a command page allowing modification of the installation state of the electric protection.

## Patentansprüche

1. Luftfahrzeug, umfassend ein Elektrizitätsverteilungssystem im Inneren dieses Luftfahrzeugs, wobei das System zwei Stromverteilungssysteme, ein primäres und ein sekundäres (10, 11), der elektrischen Energie von mehreren Energiequellen (14-16) auf Stromverbraucher bzw. elektrische Einrichtungen (18, 19) dieses Luftfahrzeugs über elektrische und/oder elektronische konfigurierbare Schutz/Schaltelemente, die durch eine zugehörige Elektronik steuerbar sind, und eine Schnittstelle Mensch/Maschine umfasst,
**dadurch gekennzeichnet, dass** jedes Stromverteilungssystem (10, 11) eine Steuerelektronik umfasst, der durch Fernübermittlung eine Konfigurationsdatei (FC1, FC2) übertragen wird, die eine Datenbank ist, die jedem der Schutz/Schaltelemente einen Installationszustand zuweist,
dass das primäre Stromverteilungssystem durch die Energiequellen (14-16) versorgt wird und erste elektrische Einrichtungen mit starkem Verbrauch (18) durch erste konfigurierbare elektromechanische Schutz/Schaltelemente versorgt,
und dass das sekundäre Stromverteilungssystem (11) durch das primäre Verteilungssystem versorgt wird und zweite elektrische Einrichtungen mit geringem Verbrauch (19) durch zweite konfigurierbare elektronische SchutzfSchaltelem.ente versorgt, wobei jede elektrische Einrichtung als "normal konfigurierbar" oder als "Plug-and-Fly-konfigurierbar" eingeordnet ist,
und dass die Schnittstelle Mensch/Maschine aus einem Monitorteil (20), der das Anzeigen und Erfassen von Informationen ermöglicht, und einem intelligenten Verbindungsteil (21), der eine Steuerung der elektrischen Zustände der elektronischen Schutz/Schaltelemente der Stromverteilungskerne (22) über einen bidirektionalen Kommunikationsbus (23) ermöglicht und der Mittel zur Versendung von mindestens einem Befehl zur Installation der Deinstallation zur dynamischen Modifizierung des programmierten Installationszustands umfasst, besteht.

2. Luftfahrzeug nach Anspruch 1, wobei für jede der elektrischen Einrichtungen ein Installationszustand fest in jeder der Konfigurationsdateien kodiert ist.

3. Luftfahrzeug nach Anspruch 2, wobei jede elektrische Einrichtung als "normal konfigurierbar" oder "Plug-and-Fly-konfigurierbar" in einer Konfigurationsdatenbank des Luftfahrzeugs eingeordnet ist.

4. Luftfahrzeug nach Anspruch 3, wobei jeder Einrichtung ein Standardvorgabe-Installationszustand über eine Konfigurationsdatei zugewiesen ist.

5. Luftfahrzeug nach Anspruch 4, wobei für eine als normal konfigurierbar" eingeordnete Einrichtung der Installationszustand auf einen festen Wert, der der Standardvorgabewert ist, festgelegt ist.

6. Luftfahrzeug nach Anspruch 4, wobei für eine als "Plug-an-Fly-konfigurierbar" eingeordnete Einrichtung der Installationszustand ein als Funktion des von einer Schnittstelle kommenden Befehls und als Funktion des Standardvorgabewerts variabler Parameter ist.

7. Verfahren zur Elektrizitätsverteilung im Inneren eines Luftfahrzeugs, wobei die elektrische Energie von mehreren Energiequellen (14-16) mittels zwei Stromverteilungssystemen, einem primären und einem sekundären (10, 11) auf elektrische Einrichtungen (18, 19) dieses Luftfahrzeugs über elektrische und/oder elektronische konfigurierbare und durch eine zugehörige Elektronik steuerbare Schutz/Schaltelemente verteilt wird und eine Schnittstelle Mensch/Maschine verwendet wird, **dadurch gekennzeichnet, dass**, während das primäre Stromverteilungssystem durch die Energiequellen (14-16) versorgt wird und elektrische Einrichtungen mit starkem Verbrauch (18) durch erste konfigurierbare elektromechanische Schutz/Schaltelemente versorgt werden, und das sekundäre Stromverteilungssystem (11) durch das primäre Verteilungssystem versorgt wird und elektrische Einrichtungen mit geringem Verbrauch (19) durch zweite konfigurierbare elektronische Schutz/Schaltelemente versorgt werden, eine Konfigurationsdatei (FC1, FC2) durch Fernübermittlung übertragen wird, die eine Datenbank ist, die jedem der Schutz/Schaltelemente einen Installationszustand in der Steuerelektronik jedes Verteilungssystems (10, 11) zuweist,
dass die elektronischen Schutz/Schaltelemente in den Stromverteilungssystemen vorinstalliert werden und in Bezug auf die Einrichtung, die das System versorgen soll, vorprogrammiert werden,
und dass mindestens ein Befehl zur Installation oder Deinstallation zur dynamischen Modifizierung des programmierten Installationszustands versendet wird,
und dass jede elektrische Einrichtung als normal konfigurierbar" oder "Plug-and-Fly-konfigurierbar" eingeordnet wird.

8. Verfahren nach Anspruch 7, wobei für jede der elektrischen Einrichtungen ein Installationszustand fest in jede der Konfigurationsdateien kodiert wird.

9. Verfahren nach Anspruch 7, wobei jeder Einrichtung ein Standardvorgabe-Installationszustand zugewiesen wird.

10. Verfahren nach Anspruch 9, wobei für eine als "normal konfigurierbar" eingeordnete Einrichtung der Installationszustand auf einen festen Wert, der der Standardvorgabewert ist, festgelegt wird.

11. Verfahren nach Anspruch 9, wobei für eine als "Plug-an-Fly-konfigurierbar" eingeordnete Einrichtung der Installationszustand ein als Funktion des von einer Schnittstelle kommenden Befehls und als Funktion des Standardvorgabewerts variabler Parameter ist.

12. Verfahren nach Anspruch 11, wobei die Schnittstelle einen Befehl zur Installation/Deinstallation sendet:
- wenn die Einrichtung in der Datenbank als "normal konfigurierbar" eingeordnet ist, autorisiert die Schnittstelle keinen Zugang zu einer Seite für einen Befehl zur Installation/Deinstallation und sie warnt den Betreiber entsprechend;
- wenn die Einrichtung als "Plug-und-Fly-konfigurierbar" eingeordnet ist, schlägt die Schnittstelle den Zugang zu einer Befehlseite vor, die eine Modifizierung des Installationszustandes des elektrischen Schutzes ermöglicht.
